# FASCICULE DE BREVET EUROPEEN

(11) **EP 0 694 846 B1**
(45) Date de publication et mention de la délivrance du brevet: **22.05.2002**
(21) Numéro de dépôt: 95401789.3
(22) Date de dépôt: 27.07.1995
(51) Int. Cl.: G06F 12/14, G06F 7/00, H01L 23/535

(54) **Un circuit programmé de brouillage numérique**
Programmierte Schaltung zur numerischen Verschleierung
Programmed circuit for numerical scrambling

(30) Priorité: 29.07.1994 FR 9409485
(43) Date de publication de la demande: 31.01.1996
(73) Titulaire: STMicroelectronics S.A., 92120 Montrouge (FR)
(72) Inventeur: Wuidart, Sylvie, Cabinet Ballot-Schmit, F-94230 Cachan (FR); Sourgen, Laurent, Cabinet Ballot-Schmit, F-94230 Cachan (FR)
(74) Mandataire: Schmit, Christian Norbert Marie

(56) Documents cités:
- FR-A- 2 504 730
- US-A- 4 278 837
- US-A- 4 633 388
- US-A- 5 095 525
- IBM TECHNICAL DISCLOSURE BULLETIN, vol.33, no.1B, Juin 1990, NEW YORK, US; pages 323 - 324 'Cell Design for Multiple Logic Circuit Families'
- PELLERIN D., HOLLEY M.: "Practical Design using Programmable Logic", 1991, PRENTICE HALL, ENGLEWOOD CLIFFS NJ 07632

## Description

L'invention concerne un procédé de brouillage numérique et son application à un circuit programmable, essentiellement pour protéger de l'inspection le contenu d'un programme exécutable. L'invention s'applique notamment aux circuits sécurisés de gestion de transactions financières.

Les données d'instructions d'un programme contenu dans une mémoire programme sont habituellement protégées par mélange des adresses physiques en mémoire de ces données d'instructions. Ainsi, ces données ne sont plus rangées dans la mémoire selon leur adresse logique, mais éparpillées. En mode opérationnel du circuit programmable, un circuit de décodage spécifique permet de retrouver l'adresse physique réelle en mémoire d'une donnée d'instructions d'après son adresse logique.

Ce procédé permet une protection contre l'inspection visuelle de la mémoire programme. Cependant, les données d'instructions transitent en clair sur le bus de données, pour être exécutées par le microprocesseur du circuit. Or, il est techniquement possible de placer un espion sur le bus de données, pour lire les données qui transitent. Le programme peut alors être reconstitué. En pratique la protection apportée est donc limitée.

En outre, la complexité du circuit de décodage d'adresse permettant de retrouver les adresses physiques réelles conduit à utiliser les mêmes clefs de codage et partant, le même circuit de décodage pour une famille de produits donnée, afin de réduire les coûts de fabrication.

Or, si un fraudeur arrive à reconstituer le programme pour un des produits, il obtient une correspondance entre les adresses physiques et les adresses logiques, ce qui lui permettra de retrouver les clefs et l'algorithme utilisés pour mélanger les adresses. Il aura ainsi la solution pour toute la famille.

Un dispositif qui brouille les données est connu de US-4,633,388.

Un objet de l'invention est d'améliorer la protection des données dans un circuit programmé en utilisant un procédé de brouillage par permutation de bits de données.

Un autre objet de l'invention est un procédé de protection de ces données facile à mettre en oeuvre, permettant une protection individualisée pour chaque produit.

On sait qu'un programme exécutable contient des données dont certaines constituent des instructions de ce programme.

On prévoit selon l'invention que ou bien ces données d'instructions ou bien les autres données sont brouillées dans la mémoire programme. C'est à dire que la permutation des bits de l'un de ces groupes de données est effectuée à la génération du code exécutable. De cette manière, on a en mémoire programme des données brouillées parmi d'autres données qui ne le sont pas.

On rappelle que selon l'acception courante, on entend par mémoire programme, l'ensemble des adresses physiques auxquelles sont mémorisées des données du code exécutable. Ces adresses peuvent être dans des circuits mémoire différents, par exemple en mémoires ROM et RAM.

Telle que definie dans les revendications, l'invention concerne donc un procédé de brouillage numérique de données.

L'invention concerne un circuit programmé comprenant au moins un circuit de permutation des bits de données, pour des données de n bits.

Selon l'invention, le circuit de permutation comprend n étages de permutation à n entrées et une sortie, chaque étage comprenant n cellules de permutation.

Avantageusement, une cellule de permutation est réalisée selon la même technologie que les cellules de la mémoire programme.

D'autres caractéristiques et avantages de l'invention sont présentés dans la description suivante, faite à titre indicatif et non limitatif, et en référence aux dessins annexés dans lesquels :
- la figure 1 représente le principe du brouillage selon l'invention,
- la figure 2 est un schéma-bloc d'un circuit programmable protégé selon l'invention,
- la figure 3 est un schéma de principe d'un circuit de permutation selon l'invention,
- la figure 4 est un dessin topologique de deux étages d'un circuit de permutation selon l'invention et
- la figure 5 est une vue en coupe AA du dessin topologique de la figure 4.

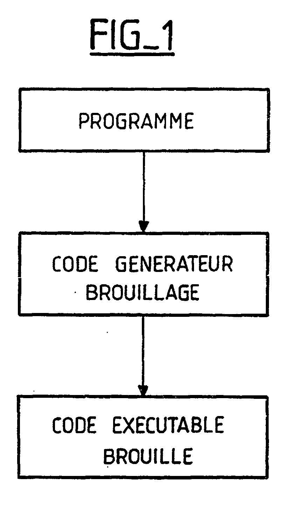

Selon l'invention, un générateur de code exécutable discrimine les données d'instruction des autres données d'un programme, pour appliquer un brouillage par permutation des bits ou bien à ces données d'instructions, ou bien aux autres données. C'est ce qui est représenté sur la figure 1. On obtient un code exécutable qui contient des données brouillées parmi d'autres qui ne le sont pas.

Ce code exécutable est mémorisé en mémoire programme d'un circuit programmable : programmation par masque en mémoire morte et/ou téléchargement en mémoire réinscriptible (RAM, EEPROM ou autres).

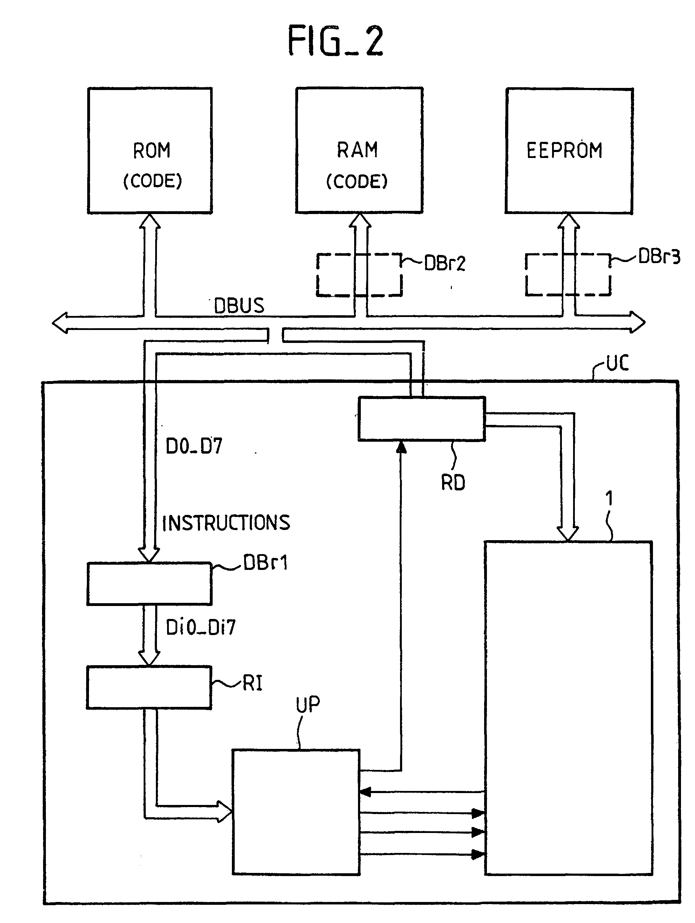

Un circuit programmable selon l'invention est représenté en figure 2. Il comprend une unité de commande UC qui est un organe du type microprocesseur, avec une entrée d'instructions sur un registre d'instruction RI et une entrée de données sur un registre de données et qui comprend une unité programmée UP. Cette unité programmée reçoit des données d'instructions à exécuter du registre d'instruction RI et contrôle le registre de données RD et par exemple des circuits de calcul arithmétique et logique, ou des compteurs, regroupés dans un circuit de calcul référencé 1 sur la figure. Dans l'exemple représenté, le circuit de calcul 1 reçoit des données du registre de données RD sur lesquelles il effectue des calculs selon les instructions de l'unité programmée.

Les différentes données sont transférées vers les registres de données ou d'instructions par un bus de données DBUS connecté à différents circuits mémoire.

Dans l'exemple représenté à la figure 2, le circuit programmable comprend une mémoire morte ROM et des mémoires réinscriptibles, dans l'exemple une mémoire vive RAM et une mémoire programmable et effaçable électriquement EEPROM.

Dans cet exemple, on prévoit que du code exécutable est mémorisé en mémoires ROM et RAM.

Selon l'invention, on prévoit que les données de la mémoire programme transitent soit en clair, soit brouillées sur le bus de données selon qu'elles sont des données d'instructions ou non.

De préférence, on choisi que ce sont les données d'instructions qui transitent brouillées. Et un circuit de permutation DBr1 est placé en entrée d'instructions de l'unité de commande, pour débrouiller les données instructions contenues dans la mémoire programme et transférées par le bus de données DBUS. Les données d'instructions transitent donc brouillées sur le bus de données.

Si ce sont les autres données qui ont été brouillées par le générateur de code, une permutation inverse est appliquée en sortie de mémoire programme, en sorte que les données d'instructions sont brouillées sur le bus. Ou bien les données brouillées transitent brouillées sur le bus et un circuit de permutation est prévu en entrée de données de l'unité de commande.

Le procédé selon l'invention permet donc de nombreuses combinaisons.

Dans l'exemple représenté à la figure 2, qui s'adresse plus particulièrement au cas où les données d'instructions transitent brouillées sur le bus parmi les autres données en clair, on a prévu deux autres circuits de permutation DBr2 et DBr3. Le premier est placé entre la mémoire RAM et le bus de données, et le second est placé entre la mémoire EEPROM et le bus de données. De cette manière, les données mémorisées dans ces deux mémoires réinscriptibles sont brouillées respectivement selon une seconde et troisième permutation, mais transitent débrouillées sur le bus de données.

Plus précisément, dans l'exemple représenté, les données d'instructions mémorisées en mémoire RAM ont subi deux permutations : la première qui leur est spécifique, réalisée à la génération du code et la deuxième appliquée en entrée de la mémoire. Et 1a deuxième permutation est débrouillée avant la transmission des données sur le bus. La deuxième permutation est de préférence différente de la première appliquée aux données d'instructions.

On pourrait aussi avoir une autre mémoire sans circuit de permutation associé.

Ainsi, le procédé selon l'invention permet d'appliquer un brouillage différent aux données d'instructions de la mémoire programme que celui appliqué aux autres données: formes mémorisées, formes transmises différentes, et aussi d'appliquer un brouillage différent à chacune des mémoires réinscriptibles: permutation ou non, sélection de la permutation des bits différente d'une mémoire réinscriptible à l'autre.

Selon l'invention, on accroit ainsi les difficultés d'espionnage des données et de compréhension du dispositif de protection.

La structure retenue dépendra principalement de l'application visée. Enfin, on verra que l'on peut facilement utiliser des permutations différentes d'un circuit programmable à l'autre.

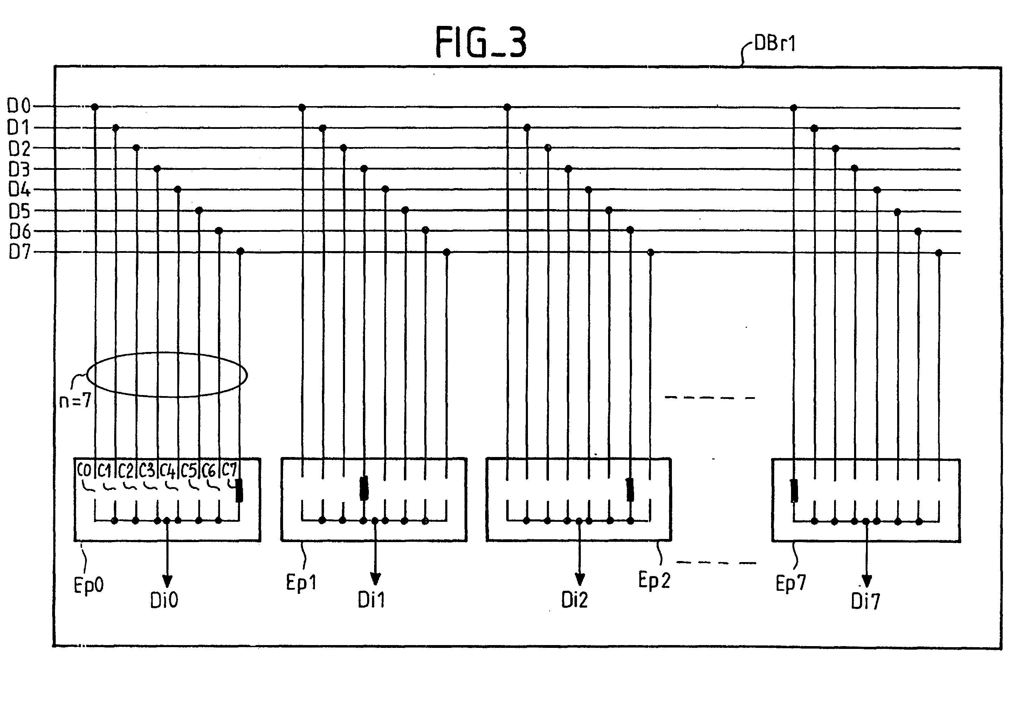

Un exemple de réalisation d'un circuit de permutation utilisé dans l'invention est détaillé sur le schéma de principe de la figure 3.

Le bus de données DBUS ayant une largeur de n bits, le circuit de permutation comprend n étages de permutation, soit Ep0 à Ep7 dans l'exemple (n = 8).

Chaque étage de permutation reçoit en entrée les n bits du bus de données, soit D0-D7 dans l'exemple et délivre un bit de sortie débrouillé : l'étage de permutation Ep0 délivre le bit de sortie Di0, ..... l'étage de permutation Ep7 délivre le bit de sortie Di7. Ce sont ces bits de sortie Di0-Di7 qui sont appliqués en entrée du registre d'instructions RI.

Chaque étage de permutation comprend n cellules de permutation c0-c7 dans l'exemple dont la fonction est celle d'un fusible, une seule parmi n permettant la transmission du bit de données d'entrée associé sur le bit de donnée de sortie de l'étage.

A chaque étage de permutation correspond un rang de cellule passante différent.

Dans l'exemple représenté, la cellule passante de l'étage
Ep0 est c7
Ep1 c3
Ep2 c6
.
.
.
Ep7 c0.

Le circuit de permutation DBr1 est ainsi caractérisé par une sélection de permutation pour chaque étage. Pour un bus de n bits de données, on a :
n possibilités pour le premier étage Ep0;
n-1 possibilités pour le deuxième étage Ep1;
et ainsi de suite.

Le procédé de brouillage selon l'invention permet ainsi n! possibilités différentes de brouillage pour un bus de données de largeur n bits.

Si les mémoires ont une largeur différente du bus de n bits données et notamment une plus grande largeur, chaque tranche de n bits subit la permutation selon l'invention. Et si la mémoire programme est plus large, le générateur de codé exécutable devra effectuer le brouillage des données de programme exécutable après les avoir découpées par tranches de n bits.

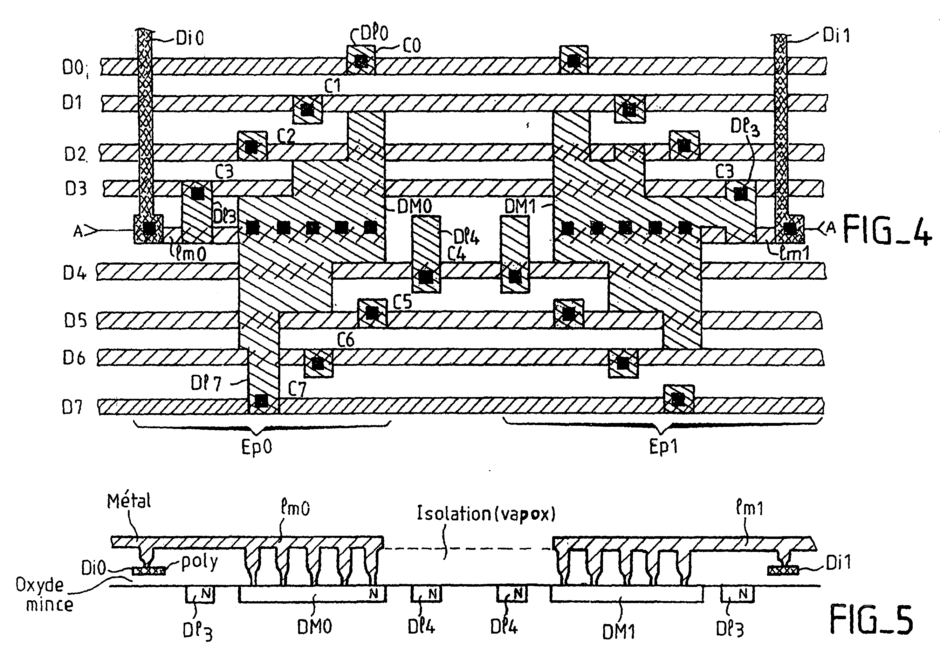

Un exemple de réalisation d'un circuit de permutation selon l'invention est représenté en figures 4 et 5.

La figure 4 représente un dessin topologique de deux étages de permutation Ep0 et Ep1 à n = 8 bits d'entrée (D0-D7) et un bit de sortie, respectivement Di0 et Di1, et la figure 5 représente une coupe AA de ce dessin.

Pour chaque étage de permutation Ep0, Ep1 on a une couche d'interconnexion médiane DM0, DM1, connectée à la ligne de bit de sortie de l'étage.

Et, pour chaque cellule c0-c7 d'un étage de permutation, on a une couche d'interconnexion locale connectée à la ligne de bit d'entrée associée à cette cellule. Par exemple, on a une couche d'interconnexion locale D10 pour la cellule c0, connectée à la ligne de bit de données d'entrée D0.

La programmation d'un étage de permutation consiste alors en une extension de la couche d'interconnexion médiane à la couche d'interconnexion locale d'une cellule parmi les n cellules de cet étage de permutation. Dans l'exemple représenté, on a ainsi pour l'étage Ep0 une extension de la couche d'interconnexion médiane DM0 à la couche d'interconnexion locale D17 de la cellule c7 et pour l'étage Ep1, on a une extension de la couche d'interconnexion médiane DM1 à la couche d'interconnexion locale D13 de la cellule c3.

Dans l'exemple représenté, les lignés de bit de données d'entrée D0-D7 sont en métal, et parallèles entre elles et la ligne de bit de données de sortie, par exemple Di0, est en polysilicium, dans un plan compris entre le plan des lignes de bit de données d'entrée et le substrat. Le contact de la couche d'interconnexion médiane à la ligne de bit de données de sortie se fait par une ligne de métal réalisée dans le même plan que les lignes de bit de données d'entrée et parallèle à celles-ci. Cette ligne de métal est notée lm0 pour l'étage Ep0 et lm1 pour l'étage Ep1.

Les couches d'interconnexion médianes ou locales peuvent être réalisées en diffusion, en métal ou autres, selon la technologie du circuit programmable.

Par exemple et comme plus particulièrement représenté en figures 4 et 5, elles sont réalisées en diffusion, par implantation ionique (appelé procédé d'implant). Ou bien la couche d'interconnexion médiane est elle en métal.

En coupe AA représentée sur la figure 5, on distingue par exemple pour l'étage Ep0 la ligne de sortie de données en polysilicium Di0, connectée à la ligne de métal lm0 au-dessus, et les contacts de cette ligne de métal sur la couche d'interconnexion médiane DM0 de l'étage de permutation Ep0.

Les couches d'interconnexions locales D13 et D14 des cellules c3 et c4 des étages Ep0 et Ep1 sont aussi visibles sur cette figure 5. Et, on voit l'extension de la couche d'interconnexion médiane DM1 à la couche d'interconnexion locale D13 de la cellule c3 de l'étage Ep1.

La particularisation d'un étage de permutation se fait donc par extension de la couche d'interconnexion médiane à la couche d'interconnexion locale qui contacte la ligne de bit de donnée d'entrée sélectionnée (dessin du masque).

La programmation du circuit de permutation selon l'invention, consiste alors selon ce procédé de fabrication à sélectionner l'extension de couche d'interconnexion médiane à la couche d'interconnexion locale qui définit la permutation, extension qui va permettre de relier la ligne de bit d'entrée à la ligne de bit de sortie.

Cette particularisation programmable est particulièrement aisée à mettre en oeuvre, permettant une souplesse d'adaptation du procédé de fabrication à chaque circuit programmable : utilisation de circuits de permutation sur les autres mémoires ou non, avec identité de brouillage ou non, etc... et permettant un brouillage différent pour chaque circuit programmable : On n'a plus d'identité de protection au sein d'une même famille. Il en résulte une protection considérablement améliorée des circuits programmables.

Avantageusement, pour une mémoire programme de type mémoire morte, on utilise le même procédé de fabrication que pour le circuit de permutation :
- d'une part, on réalise les cellules de permutation et les cellules de mémoire morte dans les mêmes étapes de fabrication, avec les mêmes masques, au moyen des mêmes types de couches d'interconnexion; la programmation ou particularisation du circuit pour le programme et le brouillage spécifiés par le client se fait au même niveau de fabrication, d'où une grande simplification de la fabrication;
- d'autre part, on augmente la difficulté d'inspection visuelle du circuit par utilisation de technologies similaires.

Selon le procédé décrit en relation avec les figures 4 et 5, la programmation des données exécutables brouillées en mémoire morte est réalisée, en utilisant une couche d'interconnexion médiane pour une même ligne de bit et une couche d'interconnexion locale pour chaque cellule étendue ou non à la couche d'interconnexion médiane selon l'état programmé voulu 0 ou 1 de la cellule.

## Revendications

1. Circuit programmé comprenant une mémoire programme (ROM, RAM) reliée par au moins un bus de données (DBUS) à une unité de commande (UC), la mémoire de programme contenant des données d'un code exécutable brouillé par application d'une permutation de bits à des données dudit code, ladite permutation est appliquée soit aux données d'instruction soit aux autres données dudit code et en ce que le circuit programmé comprend au moins un premier circuit de permutation (DBr1) entre ledit bus de données et une entrée instruction ou une entrée de données de ladite unité de commande, **caractérisé en ce que** ledit circuit de permutation comprend n lignes de bits d'entrée (D0-D7) et fournit en sortie n lignes de bit de sortie (Di0-Di7), et n étages de permutation (Ep0-Ep7) programmés par masque, chaque étage de permutation (Ep0) recevant lesdites n lignes de bit d'entrée (D0-D7) et fournissant une seule ligne de bit de sortie (Di0), et comprenant une cellule de permutation (c0-c7) par ligne de bit d'entrée (D0-D7), la programmation de chaque étage consistant à réaliser dans une seule cellule (c7) parmi les n cellules de chaque étage, une interconnexion électrique entre la ligne de bit d'entrée (D7) connectée électriquement à ladite cellule et la ligne de bit de sortie de l'étage (Di0), les connexions électriques aux lignes de bit de donnée d'entrée, aux lignes de bit de sortie et les interconnexions correspondants à des niveaux de fabrication et d'interconnexion du circuit.

2. Circuit programmé selon la revendication 1, **caractérisé en ce que** les données brouillées du code exécutable stocké en mémoire programme sont les données autres que les données d'instruction et **en ce qu'**un autre circuit de permutation est prévu, placé entre la mémoire programme et le bus de données pour appliquer un débrouillage correspondant à ces données, et appliquer un brouillage correspondant aux données d'instruction avant leur transmission sur le bus de données, le premier circuit de permutation (DBr1) étant prévu en entrée instruction de l'unité de commande (UC).

3. Circuit programmé selon la revendication 1 ou 2 dans lequel les données d'instruction de la mémoire programme transitent brouillées sur le bus de données et dans lequel le premier circuit de permutation (DBr1) est appliqué en entrée instruction de l'unité de commande (UC), et comprenant une ou des mémoires inscriptibles ou réinscriptibles (RAM, EEPROM) appartenant ou non à la mémoire programme, **caractérisé en ce qu'**il comprend au moins un autre circuit de permutation (DBr2), placé entre le bus de données (DBUS) et une mémoire inscriptible ou réinscriptible (RAM), pour appliquer un brouillage correspondant aux données en provenance du bus de données et à écrire dans ladite mémoire et pour appliquer un débrouillage correspondant aux données de ladite mémoire à transmettre sur le bus.

4. Circuit programmé selon la revendication 3, **caractérisé en ce que** les circuits de permutation (DBr2, DBr3) associés à différentes mémoires inscriptibles ou réinscriptibles effectuent des permutations différentes.

5. Circuit programmé selon la revendication 3 ou 4, **caractérisé en ce que** le premier circuit de permutation (DBr1) en entrée instruction de l'unité de commande et un circuit de permutation (DBr2) associé à une mémoire inscriptible ou réinscriptible (RAM) sont tels qu'ils effectuent des permutations différente.

6. Circuit programmé selon l'une quelconque des revendications précédentes, **caractérisé en ce que** chaque cellule (c0) de permutation associée à une ligne de bit de donnée d'entrée (D0) d'un étage de permutation comprend une ligne d'interconnexion locale (D10) connectée à ladite ligne de bit d'entrée (D0), et **en ce que** chaque étage de permutation (Ep0) comprend une ligne d'interconnexion médiane (DM0) connectée à la ligne de bit de donnée de sortie (Di0), l'interconnexion programmé dans chaque étage consistant en une extension de ladite ligne d'interconnexion médiane (DM0) à la ligne d'interconnexion locale (D10) d'une cellule parmi les n cellules dudit étage de permutation.

7. Circuit programmé selon la revendication 6, **caractérisé en ce que** la ligne d'interconnexion médiane (DM0) et les lignes d'interconnexion locales (D10-D17) sont des lignes d'interconnexion réalisées par implantation ionique.

8. Circuit programmé selon la revendication 7, **caractérisé en ce que** la ligne d'interconnexion médiane (DM0) de chaque étage de permutation est réalisée en métal et les ligne d'interconnexions locales (D10-D17) en diffusion, par implantation ionique.

9. Circuit programmé selon l'une quelconque des revendications 1 à 5, comprenant une mémoire morte (ROM), **caractérisé en ce que** les cellules de permutation (c0-c7) sont réalisées comme les cellules de ladite mémoire morte.

## Patentansprüche

1. Programmierte Schaltung mit einem Programmspeicher (ROM, RAM), der über wenigstens einen Datenbus (DBUS) mit einer Steuereinheit (UC) verbunden ist,
wobei der Programmspeicher Daten eines ausführbaren Codes enthält, der durch Anwenden eine Bit-Permutation auf die Daten des Codes verschleiert ist,
wobei die Permutation entweder auf Befehlsdaten oder andere Daten des Codes angewendet wird und die programmierte Schaltung wenigstens einen ersten Permutationsschaltkreis (DBr1) zwischen dem Datenbus und einem Befehlseingang oder einem Dateneingang der Steuereinheit umfasst,
**dadurch gekennzeichnet, dass**
der Permutationsschaltkreis umfasst:
n Bit-Eingangsleitungen (D0 - D7) und am Ausgang n Bit-Ausgangsleitungen (Di0 - Di7) und
n Permutationsstufen (Ep0 - Ep7), die maskenprogrammiert sind,
wobei jede Permutationsstufe (Ep0) die n Bit-Eingangsleitungen (D0 - D7) empfängt und eine einzige Bit-Ausgangsleitung (Di0) ausgibt und eine Permutationszelle (c0 - c7) pro Bit-Eingangsleitung (D0 - D7) umfasst,
wobei die Programmierung jeder Stufe darin besteht, in einer einzigen Zelle (c7) unter den n Zellen jeder Stufe eine elektrische Zwischenverbindung zwischen der Bit-Eingangsleitung (D7), die elektrisch mit der Zelle verbunden ist, und der Bit-Ausgangsleitung der Stufe (Di0) herzustellen,
wobei die elektrischen Verbindungen mit den Bit-Dateneingangsleitungen, mit den Bit-Ausgangsleitungen und die Zwischenverbindungen Herstellungsebenen und Zwischenverbindungsebenen der Schaltung entsprechen.

2. Programmierte Schaltung nach Anspruch 1,
**dadurch gekennzeichnet, dass**
die verschleierten Daten des ausführbaren Codes, die in dem Programmspeicher abgelegt sind, andere Daten als Befehlsdaten sind und
ein weiterer Permutationsschaltkreis zwischen dem Programmspeicher und dem Datenbus für eine Entschleierung, die diesen Daten entspricht, und für eine Verschleierung, die den Befehlsdaten entspricht, vor ihrer Übertragung über den Datenbus vorgesehen ist, wobei der erste Permutationsschaltkreis (DBr1) am Befehlseingang der Steuereinheit (UC) vorgesehen ist.

3. Programmierte Schaltung nach Anspruch 1 oder 2, bei dem die Befehlsdaten des Programmspeichers den Datenbus verschleiert durchlaufen und
der erste Permutationsschaltkreis (DBr1) am Befehlseingang der Steuereinheit (UC) vorgesehen ist und einen oder mehrere beschreibbare oder wiederbeschreibbare Speicher (RAM, EEPROM) zu oder unabhängig von dem Programmspeicher umfasst,
**dadurch gekennzeichnet, dass**
sie wenigstens einen weiteren Permutationsschaltkreis (DBr2) zwischen dem Datenbus (DBUS) und einem beschreibbaren oder wiederbeschreibbaren Speicher (RAM) umfasst, um eine Verschleierung entsprechend den Daten von dem Datenbus durchzuführen und in den Speicher zu schreiben, und um eine Entschleierung entsprechend den Daten in dem Speicher durchzuführen, die über den Datenbus zu übertragen sind.

4. Programmierte Schaltung nach Anspruch 3,
**dadurch gekennzeichnet, dass**
die Permutationsschaltkreise (DBr2, DBr3), die zu verschiedenen beschreibbaren oder wiederbeschreibbaren Speichern gehören, verschiedene Permutationen durchführen.

5. Programmierte Schaltung nach Anspruch 3 oder 4,
**dadurch gekennzeichnet, dass**
der erste Permutationsschaltkreis (Dbr1) am Befehlseingang der Steuereinheit und ein Permutationsschaltkreis (DBr2), der zu einem beschreibbaren oder wiederbeschreibbaren Speicher (RAM) gehört, verschiedene Permutationen durchführen.

6. Programmierte Schaltung nach einem der vorangehenden Ansprüche,
**dadurch gekennzeichnet, dass**
jede Permutationszelle (c0), die zu einer Bit-Dateneingangsleitung (D0) einer Permutationsstufe gehört, eine lokale Zwischenverbindungsleitung (D10) umfasst, die mit der Bit-Eingangsleitung (D0) verbunden ist, und
jede Permutationsstufe (Ep0) eine mittlere Zwischenverbindungsleitung (DM0) umfasst, die mit der Bit-Datenausgangsleitung (Di0) verbunden ist, wobei die programmierte Zwischenverbindung in jeder Stufe aus einer Verlängerung der mittleren Zwischenverbindungsleitung (DM0) zu der lokalen Zwischenverbindungsleitung (D10) einer Zelle unter den n Zellen der Permutationsstufe besteht.

7. Programmierte Schaltung nach Anspruch 6,
**dadurch gekennzeichnet, dass**
die mittlere Zwischenverbindungsleitung (DM0) und die lokalen Zwischenverbindungsleitungen (D10 - D17) Zwischenverbindungsleitungen in Form von Ionenimplantationen sind.

8. Programmierte Schaltung nach Anspruch 7,
**dadurch gekennzeichnet, dass**
die mittlere Zwischenverbindungsleitung (DM0) jeder Permutationsstufe aus Metall hergestellt ist und die lokalen Zwischenverbindungsleitungen (D 10 - D17) durch Diffusion nach Ionenimplantation hergestellt ist.

9. Programmierte Schaltung nach einem der Ansprüche 1 bis 5 mit einem Festwertspeicher (ROM),
**dadurch gekennzeichnet, dass**
die Permutationszellen (c0 - c7) Zellen des Festwertspeichers sind.

## Claims

1. Programmed circuit comprising a program memory (ROM, RAM) connected by at least one data bus (DBUS) to a control unit (UC), the program memory containing data of an executable code scrambled by applying a permutation of bits to data of the said code, the said permutation being applied either to the instruction data or to other data of the said code and the programmed circuit comprising at least a first permutation circuit (DBr1) between the said data bus and an instruction input or a data input of the said control unit, **characterised in that** the said permutation circuit comprises n input bit lines (D0-D7) and supplies as an output n output bit lines (Di0-Di7), and n programmed permutation stages (Ep0-Ep7) per mask, each permutation stage (Ep0) receiving the said n input bit lines (D0-D7) and supplying a single output bit line (Di0), and comprising one permutation cell (c0-c7) per input bit line (D0-D7), the programming of each stage consisting of making, in only one cell (c7) amongst the n cells of each stage, an electrical interconnection between the input bit line (D7) electrically connected to the said cell and the output bit line of the stage (Di0), the electrical connections to the input data bit lines and to the output bit lines and the interconnections corresponding to levels of manufacture and interconnection of the circuit.

2. Programmed circuit according to Claim 1, **characterised in that** the scrambled data of the executable code stored in program memory are the data other than the instruction data and **in that** another permutation circuit is provided, placed between the program memory and the data bus, in order to apply a corresponding scrambling to these data, and to apply a corresponding scrambling to the instruction data before they are transmitted over the data bus, the first permutation circuit (DBr1) being provided at the instruction input of the control unit (UC).

3. Programmed circuit according to Claim 1 or 2, in which the instruction data of the program memory pass scrambled over the data bus and in which the first permutation circuit (DBr1) is applied as an instruction input of the control unit (UC), and comprising one or more writeable or rewriteable memories (RAM, EEPROM) belonging or not to the program memory, **characterised in that** it comprises at least one other permutation circuit (DBr2), placed between the data bus (DBUS) and a writeable or rewriteable memory (RAM), in order to apply a corresponding jamming to the data coming from the data bus and to be written in the said memory and to apply a corresponding unscrambling to the data of the said memory to be transmitted over the bus.

4. Programmed circuit according to Claim 3, **characterised in that** the permutation circuits (DBr2, DBr3) associated with different writeable or rewriteable memories effect different permutations.

5. Programmed circuit according to Claim 3 or 4, **characterised in that** the first permutation circuit (DBr1) at the instruction input of the control unit and a permutation circuit (DBr2) associated with a writeable or rewriteable memory (RAM) are such that they effect different permutations.

6. Programmed circuit according to any one of the preceding claims, **characterised in that** each permutation cell (c0) associated with an input data bit line (D0) of a permutation stage comprises a local interconnection line (D10) connected to the said input bit line (D0), and **in that** each permutation stage (Ep0) comprises a middle interconnection line (DM0) connected to the output data bit line (Di0), the programmed interconnection in each stage consisting of an extension of the said middle interconnection line (DM0) to the said local interconnection line (D10) of one cell amongst the n cells of the said permutation stage.

7. Programmed circuit according to Claim 6, **characterised in that** the middle interconnection line (DM0) and the local interconnection lines (D10-D17) are interconnection lines produced by ion implantation.

8. Programmed circuit according to Claim 7, **characterised in that** the middle interconnection line (DM0) of each permutation stage is produced from metal and the local interconnection line (D10-D17) in diffusion, by ion implantation.

9. Programmed circuit according to any one of Claims 1 to 5, comprising a read only memory (ROM), **characterised in that** the permutation cells (c0-c7) are produced like the cells of the said read only memory.
